# NEUE EUROPÄISCHE PATENTSCHRIFT

(11) **EP 0 674 830 B2**
(45) Veröffentlichungstag und Bekanntmachung des Hinweises auf die Entscheidung über den Einspruch: **02.05.2003**
(45) Hinweis auf die Patenterteilung: 03.06.1998
(21) Anmeldenummer: 95100181.7
(22) Anmeldetag: 09.01.1995
(51) Int. Cl.: A01C 7/08

(54) **Verteiler für eine Verteilmaschine für Saatgut und/oder Dünger**
Distribution head for a fertilizer spreader or seed drill
Tête de distribution pour un épandeur de semence ou d'engrais granulé

(30) Priorität: 31.03.1994 DE 4411240
(43) Veröffentlichungstag der Anmeldung: 04.10.1995
(73) Patentinhaber: Kverneland Accord GmbH & Co. KG, 59494 Soest (DE)
(72) Erfinder: Weiste, Helmut, D-59494 Soest (DE)
(74) Vertreter: Becker, Thomas, Dr., Dipl.-Ing.

(56) Entgegenhaltungen:
- EP-A- 0 252 348
- EP-A- 0 309 608
- EP-A- 0 328 858
- EP-A- 0 376 018
- DE-A- 1 557 920
- DE-C- 2 603 088
- DE-U- 4 004 685
- DE-U- 9 313 779
- FR-A- 2 339 327
- SU-A- 1 457 836
- US-A- 4 489 892
- US-A- 4 989 784
- DUDEN - DE Universalwörterbuch

## Beschreibung

Die Erfindung betrifft einen Verteiler für eine pneumatisch arbeitende Verteilmaschine für Saatgut, Dünger u. dgl.

Seit langem sind Verteilmaschinen für die Ausbringung von Saatgut, Dünger u. dgl. bekannt, bei denen das zu fördernde Gut mittels eines Luftstromes in einen Verteiler gefördert wird und über diesen Verteiler über Verteilerleitungen zu den entsprechenden Ausbringvorrichtungen gelangt. Häufig besteht die Notwendigkeit, eine oder mehrere Verteilerleitungen von dem Zustrom von Dünger, Saatgut od. dgl. abzusperren, um z. B. beim Säen eine Fahrgasse anzulegen oder Randbereiche des Feldes nicht zu düngen oder zu säen.

Aus DE-U-87 08 456 und EP-A-0 309 608 ist beispielsweise eine Absperrvorrichtung bekannt, die an der Verteilerleitung anschließt, und wenn diese Absperrvorrichtung die Verteilerleitung sperrt, wird das anstehende Saat- bzw. Düngematerial in den Vorratsbehälter über eine Ableitung abgeführt.

Nachteilig ist diese Absperrung im Bereich der Verteilerleitungen auch dann, wenn sich das Verteilergehäuse aus Platzgründen innerhalb des Vorratstankes befindet und insbesondere dann, wenn die Füllhöhe des Vorratstankes sich oberhalb des Verteilers befindet.

Aus der DE-40 04 685 A1 ist eine Verteilvorrichtung zum Beispiel für Saatgut bekannt, die über Absperrmittel verfügt, so daß bestimmte Austragselemente verschlossen werden können, z. B. wenn eine Fahrgasse angelegt werden soll. Diese Absperrmittel sind in ihrer Öffnungsposition so angeordnet, daß sie einen Teil der Wandungen bilden, die den Durchflußkanal für das Verteilgut bilden. Da die Absperrmittel jedoch zwischen dem eigentlichen Verteilerkopf und den Austragselementen angeordnet sind, ist die Gefahr groß, daß sich das Absperrmittel in geschlossener Position mit davor angesammeltem Verteilgut zusetzt, und mit hohem technischen Aufwand wird versucht, die derartige Verstopfungsgefahr zu verringern.

Das Zusetzen eines sich in geschlossener Position befindlichen Absperrmittels durch Verteilgut wird dadurch verhindert, daß die Absperrmittel im Bereich des Verteilerkopfes angeordnet sind.

Aus der EP-0 328 858 sind Absperrmittel bekannt, die innerhalb des Verteilers angeordnet sind, um die oben genannten Nachteile zu umgehen. Die Ausführung der Absperrmittel innerhalb des Verteilerkopfes hat sich bewährt und die Absperrmittel sind schwenkbar vor den Abgängen der Verteilerleitungen angeordnet und in geöffnetem Zustand stehen sie in den Verteilerraum des Verteilers. Dadurch wird der freie Verteilerraum eingeengt und dies kann zu einer ungleichmäßigen Dosierung des zu verteilenden Gutes auf die Verteilerleitungen führen.

Der Erfindung liegt die Aufgabe zurunde, einen Verteiler für eine Verteilmaschine bereitzustellen, bei dem die Absperrmittel für die Verteilerleitungen im Bereich des Verteilers angeordnet sind, der jedoch eine präzise Dosierung des zu verteilenden Gutes ermöglicht und dabei einfach und kostengünstig herzustellen ist.

Diese der Erfindung zugrundeliegende Aufgabe wird durch die Merkmale des Hauptanspruches gelöst.

Die Erfindung geht insbesondere von dem Gedanken aus, einen Verteiler dergestalt mit Absperrmitteln auszustatten, daß diese Absperrmittel in ihrer Ruhestellung die Verteilung des zu verteilenden Gutes nicht beeinflussen und nur nach Verbringen in ihre Schließposition das Absperren des bzw. der jeweiligen Verteilerleitungen bewirken.

Vorteilhafte Ausgestaltungen der Erfindung sind in den Unteransprüchen erläutert.

Nachfolgend werden vorteilhafte Ausgestaltungen in den Zeichnungen erläutert, wobei
- Fig. 1: in einem Querschnitt einen Verteiler darstellt,
- Fig. 2: ist eine Draufsicht auf einen derartigen Verteiler,
- Fig. 3: stellt einen Verteiler wiederum im Schnitt mit weiteren Absperrmitteln dar,
- Fig. 4: zeigt eine weitere Ausführungsform eines Absperrmittels.

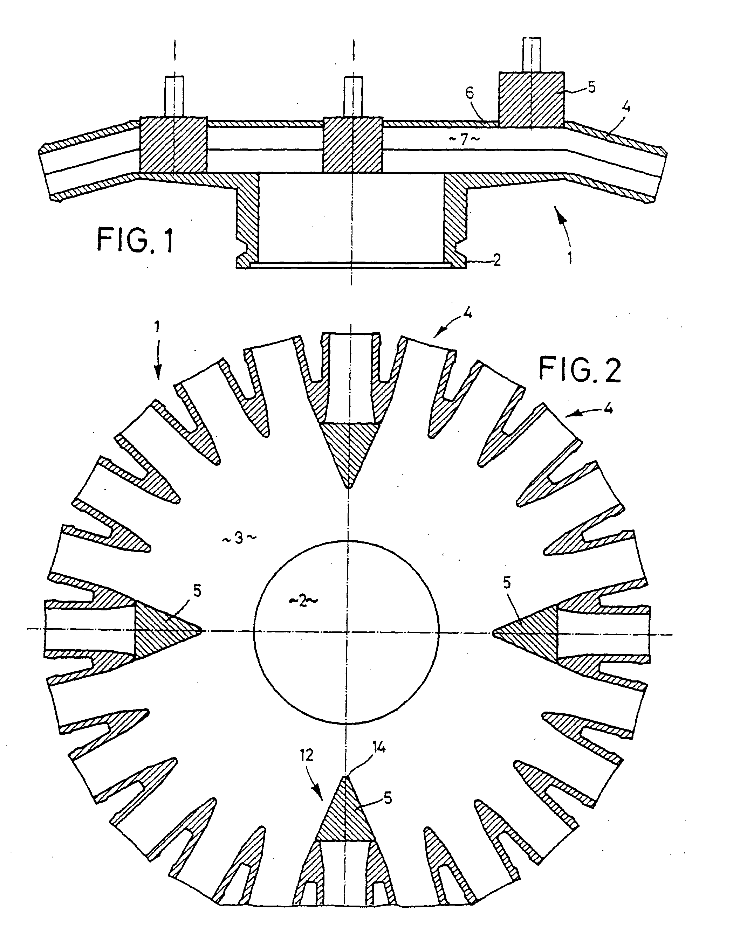

Bezugnehmend auf Fig. 1 ist ein Verteiler dargestellt, der einen Anschluß für ein Zuführungsrohr 2 besitzt, wobei oberhalb dieses Zuführungsrohres 2 ein Verteilraum 3 angeordnet ist. Von diesem Verteilraum 3 gehen die Verteilerleitungen 4 ab bzw die Anschlüsse für die Verteilerleitungen 4, und diese Verteilerleitungen 4 führen letztendlich zu den Ausbringvorrichtungen für das geförderte Gut.

Um ein geplantes Absperren der Verteilerleitungen 4 zu ermöglichen, beispielsweise wenn eine Fahrgasse angelegt werden soll, werden Absperrmittel 5 im Bereich der Abgänge von einer Öffnungsposition in eine Schließposition verbracht, so daß die betreffenden Verteilerleitungen 4 direkt im Verteiler raum 3 abgesperrt werden und die abgesperrten Ausbringvorrichtungen kein Fördergut liefern. In Fig. 1 bestehen die Absperrmittel 5 aus Schiebern, die vertikal bewegbar sind und in ihrer Öffnungsposition einen Teil der unmittelbaren bzw. auch in bestimmter Entfernung gelegenen Wandung eines Durchflußkanales 7 zu der Verteilerleitung 4 bilden. Das Absperrmittel 5 kann bei Bedarf in eine Schließposition gebracht werden, indem es abgesenkt wird, wie es auf der linken Seite von Fig. 1 dargestellt ist.

Aus Fig. 1 wird deutlich, daß das Absperrmittel 5 in seiner Öffnungsposition die freie Verteilung des Fördergutes innerhalb des Verteilers 1 überhaupt nicht beeinträchtigt und somit eine exakte Dosierung des Fördergutes auf die einzelnen Verteilerleitungen 4 ermöglicht. Bei den abgesenkten Absperrmitteln 5 in ihrer Schließposition bleibt der Verteilraum 3 des Verteilers 1 groß genug, um eine präzise Verteilung auf die verbleibenden Verteilerleitungen 4 zu ermöglichen.

Selbstverständlich ist es möglich, die Absperrmittel 5 je nach Bedarf unterhalb des Durchflußkanales 7 anzuordnen bzw. seitlich davon.

In Fig. 2 ist eine Draufsicht auf einen Verteiler 1 dargestellt, und es wird deutlich, daß eine Vielzahl von Verteilerleitungen 4 aus dem Verteiler 1 münden. In diesem Beispiel sind vier Absperrmittel 5 vorgesehen, die unmittelbar vor den Abgängen zu den Verteilerleitungen 4 angeordnet sind. Sperrkanten 12 der Absperrmittel 5 sind dreieckig ausgebildet, wobei Spitzen zum Zuführungsrohr 2 weisen, um zum einen einen harten Aufprall des Saatgutes auf die Sperrkanten 12 und damit eine Verletzung des Saatgutes zu vermeiden und zum andern, um eine gleichmäßige Verteilung des Fördergutes zu erzielen.

In diesem Ausführungsbeispiel sind die Absperrmittel 5 gleichmäßig über den Umfang des Verteilers 1 angeordnet, um eine gleichmäßige Dosierung des Fördergutes auf die nicht abgesperrten Verteilerleitungen 4 zu erreichen. Falls die Anzahl der Verteilerleitungen 4 eines Verteilers 1 ungerade sein sollte, so können die Sperrkanten 12 asymmetrisch ausgeführt werden.

Eine asymmetrische bzw. schräge Ausbildung der Sperrkanten 12 bzw. Absperrmittel 5 ist auch dann vorteilhaft, wenn eine vermehrte bzw. verminderte Zuführung des Fördergutes auf die benachbarte Verteilerleitung gewünscht wird. Eine vermehrte Förderung auf die benachbarte Verteilerleitung 4 ist beispielsweise dann vorteilhaft, wenn der Randreiheneffekt ausgenutzt werden soll.

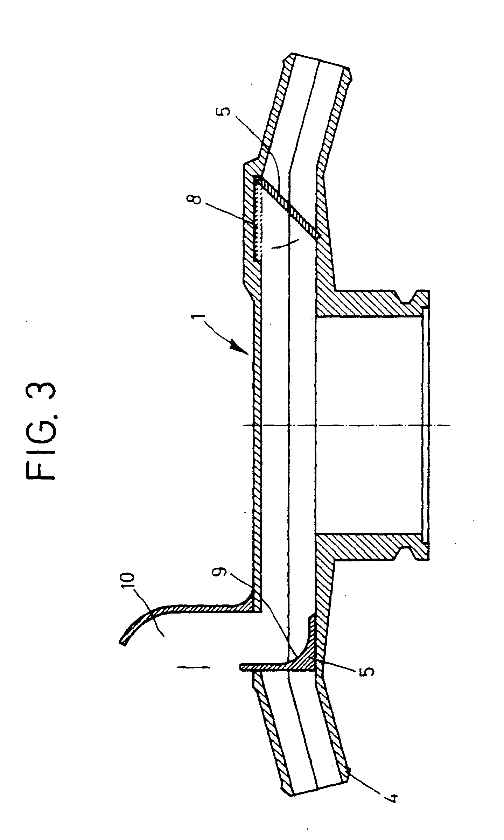

Bezugnehmend auf Fig. 3 ist das Absperrmittel 5 als Klappe ausgebildet, die in ihrer Öffnungsposition hochgeschwenkt ist und in einer Ausnehmung 8 Platz findet, um so einen Teil der Wandung des Durchflußkanales zu bilden; in ihrer Schließposition wird das Absperrmittel 5 herabgeschwenkt, wie dies aus Fig. 3 ersichtlich wird. Auf der linken Seite von Fig. 3 ist das Absperrmittel 5 wiederum vertikal beweglich ausgeführt, wobei das Absperrmittel 5 eine gekrümmte Prallfläche 9 aufweist, um eine Beschädigung des Saatgutes od. dgl. zu verhindern. Die Prallfläche 9 bewirkt eine Ableitung des Fördergutes in Richtung eines Ableitstutzens 10, der das abgeleitete Fördergut zurückführt in den Bereich des Dosiergerätes, so daß das abgeleitete Fördergut wiederum zu dem Verteiler 1 transportiert werden kann. Wenn das Absperrmittel 5 in seine Öffnungsposition nach oben bewegt wird, wird automatisch der Ableitstutzen 10 verschlossen und die Verteilerleitung 4 geöffnet.

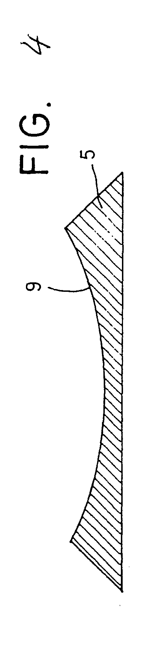

Bezugnehmend auf Fig. 4 ist eine weitere Ausführungsform eines Absperrmittels 5 dargestellt, wobei dieses Absperrmittel 5 in einer Draufsicht gezeigt wird. Durch die gezeigte Ausbildung der Prallfläche 9 des Absperrmittels 5 wird erreicht, daß das Fördergut, das auf den konkaven mittleren Bereich der Prallfläche 9 trifft, auf den benachbarten, nicht dargestellten Ableitstutzen 10 gelenkt wird, während das Fördergut, das auf die nach außen gerichteten Seiten des Absperrmittels 5 gelangt, auf die benachbarten Verteilerleitungen gelenkt wird. Durch eine derartige Ausbildung der Prallfläche 9 des Absperrmittels 5 wird erreicht, daß ein gewisser Prozentsatz des Fördergutes auf die umliegenden Förderleitungen gelenkt wird, so daß diese benachbarten Förderleitungen eine erhöhte Zugabe an Fördergut erhalten. Durch eine Änderung der Ausformung der Prallfläche 9 kann in einfacher Weise der Prozentsatz des in den Ableitstutzen 10 abgeleiteten Fördergutes und der Prozentsatz des auf die benachbarten Schare abgeleiteten Fördergutes verändert werden. Wenn z. B. die seitlichen Ableitflächen größer ausgebildet werden, so wird der Prozentsatz des auf die Nachbarschare umgeleiteten Fördergutes erhöht und umgekehrt.

Die Absperrmittel 5 können beispielsweise mittels Elektromotoren, Elektromagneten, Hydraulik- oder Pneumatikzylindern einzeln oder zu bestimmten Gruppen geordnet bewegt werden.

## Patentansprüche

1. Verteilerkopf für eine pneumatisch arbeitende Verteilmaschine für Saatgut, Dünger u. dgl., wobei der Verteilerkopf mit einem Vorratsbehälter verbunden ist und Verteilerleitungen (4) an den Verteilerkopf anschließen, die zu den Ausbringvorrichtungen für das zu verteilende Gut führen, und der Verteilerkopf Absperrmittel (5) aufweist, um eine oder mehrere der Verteilerleitungen (4) abzusperren, um z.B. Fahrgassen anzulegen, wobei die Absperrmittel (5) im Verteilraum (3) so angeordnet sind, daß sie in ihrer Öffnungsposition einen Teil der Wandungen (6) bilden, die im Bereich des Abgangs und unmittelbar vor dem Abgang zu der jeweiligen Verteilerleitung (4) einen Durchflußkanal (7) bilden, ohne in den Verteilerraum (3) des Verteilerkopfes hineinzuragen und sie in ihrer Schließposition den Durchflußkanal (7) im Bereich der Abgangs und unmittelbar vor dem Abgang zu der jeweiligen Verteilerleitung (4) absperren.

2. Verteiler gemäß Anspruch 1, **dadurch gekennzeichnet, daß** die Absperrmittel (5) vertikal bewegbar ausgebildet sind, um sie in ihre Schließ- bzw. in ihre Öffnungsposition zu bewegen.

3. Verteiler gemäß Anspruch 1, **dadurch gekennzeichnet, daß** die Absperrmittel (5) schwenkbar ausgebildet sind, um sie in ihre Schließ- bzw. in die Öffnungsposition zu bewegen.

4. Verteiler gemäß einem der vorhergehenden Ansprüche, **dadurch gekennzeichnet, daß** die Sperrkante (12) des Absperrmittels (5) eine in den Verteilerraum (3) gerichtete Spitze (14) aufweist.

5. Verteiler gemäß Anspruch 4, **dadurch gekennzeichnet, daß** die Spitze (14) der Absperrkante (12) in Bezug auf die abgesperrte Verteilerleitung (4) asymmetrisch angeordnet ist.

6. Verteiler gemäß einem der vorhergehenden Ansprüche, **dadurch gekennzeichnet, daß** das Absperrmittel (5) eine zu einem Ableitstutzen (10) ausgerichtete Prallfläche (9) aufweist.

7. Verteiler gemäß einem der vorhergehenden Ansprüche, **dadurch gekennzeichnet, daß** die Absperrmittel (5) gleichmäßig über den Umfang des Verteilers (1) verteilt sind.

8. Verteiler gemäß einem der vorhergehenden Ansprüche, **dadurch gekennzeichnet, daß** der Ableitstutzen (10) mit einer Leitung verbunden ist, die im Bereich der Dosiereinrichtung mündet.

9. Verteiler nach einem der vorhergehenden Ansprüche, **dadurch gekennzeichnet, daß** die Absperrmittel (5) als Klappen ausgebildet sind, die nur die Abgänge verschließen und in der gegenüberliegenden Wandung der Ableitstutzen (10) ihre Ruhestellung haben.

10. Verteiler nach einem der vorhergehenden Ansprüche, **dadurch gekennzeichnet, daß** in einem Verteilergehäuse nebeneinanderliegende Umleiteinrichtungen bzw. Absperrmittel (5) in Gruppen zusammengefaßt schaltbar sind.

11. Verteiler nach einem der vorhergehenden Ansprüche, **dadurch gekennzeichnet, daß** die Aussaatmenge über eine Regeleinrichtung um den entsprechenden prozentualen Anteil der geschlossenen Abgänge des Verteilergehäuses reduziert wird.

12. Verteiler gemäß einem der vorhergehenden Ansprüche, **dadurch gekennzeichnet, daß** die Absperrmittel (5) so geformt sind, daß der Hauptstrom in den Ableitstutzen (10) geleitet und die übrige Menge auf die Nachbarschare abgelenkt wird.

## Claims

1. A distributor head for a pneumatically operated spreader machine for seeds, fertilisers and the like, wherein the distributor head is connected to a supply container, and distributor lines (10), which lead to the discharge devices for the material to be distributed, adjoin the distributor head, and the distributor head has shut-off means (5) in order to shut off one or more of the distributor lines (4), in order to lay down travelling lanes for example, wherein the shut-off means (5) are disposed in the distributor space so that in their open position they form part of the walls (6) which form a flow channel (7) in the region of the outlet and directly in front of the outlet to the respective distributor line (4), without protruding into the distributor space (3) of the distributor head, and in their closed position they shut off the flow channel (7) in the region of the outlet and directly in front of it to the respective distributor line (4)

2. A distributor according to claim 1, **characterised in that** the shut-off means (5) are constructed so that they are vertically movable in order to move into their closed or into their open position.

3. A distributor according to claim 1, **characterised in that** the shut-off means (5) are of swivelling construction in order to move into their closed or into their open position.

4. A distributor according to any one of the preceding claims, **characterised in that** the shut-off edge (12) of the shut-off means (5) has an apex (14) directed into the distributor space (3).

5. A distributor according to claim 4, **characterised in that** the apex (14) of the shut-off edge (12) is disposed asymmetrically with respect to the distributor line (4) which is shut off.

6. A distributor according to any one of the preceding claims, **characterised in that** the shut-off means (5) has an impact face (9) aligned towards a diversion connection piece (10).

7. A distributor according to any one of the preceding claims, **characterised in that** the shut-off means (5) are uniformly distributed over the periphery of the distributor (1).

8. A distributor according to any one of the preceding claims, **characterised in that** the diversion connection piece (10) is connected to a line which leads into the region of the metering device.

9. A distributor according to any one of the preceding claims, **characterised in that** the shut-off means (5) are constructed as flaps which only seal the outlets and have their inoperative position in the opposite wall of the diversion connection pieces (10).

10. A distributor according to any one of the preceding claims, **characterised in that** diversion devices or shut-off means (5) which are situated side by side in a distributor housing can be switched combined in groups.

11. A distributor according to any one of the preceding claims, **characterised in that** the amount of seed discharged is reduced, via a regulating device, by the corresponding percentage proportion of closed outlets of the distributor housing.

12. A distributor according to any one of the preceding claims, **characterised in that** the shut-off means (5) are shaped so that the main flow is directed into the diversion connection piece (10) and the remaining amount is deflected on to the neighbouring assemblages.

## Revendications

1. Tête de distribution pour un épandeur pneumatique de semence, engrais et similaire, la tête de distribution étant reliée à un réservoir et les conduites de distribution étant raccordées sur la tête de distribution, qui aboutissent aux dispositifs d'épandage pour la matière à épandre, et la tête de distribution présentant des moyens d'arrêt pour bloquer une ou plusieurs des conduites de distribution, pour établir par exemple des allées de circulation, les moyens d'arrêt (5) étant disposés de façon à former dans leur positions d'ouverture une partie des parois (6) qui forment un canal d'écoulement (7) dans la zone de la sortie et directement avant la sortie à la conduite de distribution respective (4) sans dépasser dans le compartiment de distribution (3) de la tête de distribution et qu'ils bloquent dans leur position de fermeture le canal d'écoulement (7) dans la zone de la sortie et directement avant la sortie à la conduite de distribution (4) concernée.

2. Tête de distribution selon la revendication 1, **caractérisée en ce que** les moyens d'arrêt (5) sont disposés de façon mobile sur un plan vertical afin de les déplacer dans leur position de fermeture ou dans leur position d'ouverture.

3. Tête de distribution selon la revendication 1, **caractérisée en ce que** les moyens d'arrêt (5) sont conçus de façon basculante afin de les déplacer dans leur position de fermeture ou dans la position d'ouverture.

4. Tête de distribution selon l'une quelconque des revendications précédentes, **caractérisée en ce que** le bord d'arrêt (12) du moyen d'arrêt (5) présente une pointe (14) dirigée dans le compartiment de distribution (3).

5. Tête de distribution selon la revendication 4, **caractérisée en ce que** la pointe (14) du bord d'arrêt (12) est disposée de façon asymétrique par rapport à la conduite de distribution (4) fermée.

6. Tête de distribution selon l'une quelconque des revendications précédentes, **caractérisée en ce que** le moyen d'arrêt (5) présente une surface de rebondissement (9) orientée vers une tubulure de déviation (10).

7. Tête de distribution selon l'une quelconque des revendications précédentes, **caractérisée en ce que** les moyens d'arrêt (5) sont répartis uniformément à la périphérie de la tête de distribution (1).

8. Tête de distribution selon l'une quelconque des revendications précédentes, **caractérisée en ce que** la tubulure de déviation (10) est reliée à une conduite qui débouche dans la zone du dispositif de dosage.

9. Tête de distribution selon l'une quelconque des revendications précédentes, **caractérisée en ce que** les moyens d'arrêt (5) se présentent sous la forme de clapets qui ne ferment que les sorties et ont leur position de repos dans la paroi opposée des tubulures de déviation (10).

10. Tête de distribution selon l'une quelconque des revendications précédentes, **caractérisée en ce que** des. dispositifs de déviation et des moyens d'arrêt (5) situés de façon juxtaposée dans un boîtier de distribution peuvent être commutés sous forme regroupée.

11. Tête de distribution selon l'une quelconque des revendications précédentes, **caractérisée en ce que** la quantité à semer est réduite par un dispositif de réglage du pourcentage correspondant des sorties fermées du boîtier de distribution.

12. Tête de distribution selon l'une quelconque des revendications précédentes, **caractérisée en ce que** les moyens d'arrêt (5) sont formés de façon que le flux principal est guidé dans la tubulure de déviation (10) et que la quantité restante est déviée vers les socs voisins.
